Europäisches Patentamt

European Patent Office

Office européen des brevets

(19)

(11) EP 0 817 472 B1

## (12) FASCICULE DE BREVET EUROPEEN

(45) Date de publication et mention
de la délivrance du brevet:
**20.03.2002 Bulletin 2002/12**

(51) Int Cl.⁷: $H04N\ 3/15$, $H04N\ 5/32$

(21) Numéro de dépôt: **97401579.4**

(22) Date de dépôt: **03.07.1997**

(54) **Procédé et dispositif pour la prise d'images exposées aux rayons X ou gamma avec optimisation du temps d'exposition**

Verfahren und Vorrichtung zur Aufnahme von Röntgen- und Gammastrahlen-Bildern mit Optimierung der Belichtungszeit

X- or gamma-ray imaging method and apparatus with exposure time optimisation

(84) Etats contractants désignés:
**DE GB IT**

(30) Priorité: **05.07.1996 FR 9608422**

(43) Date de publication de la demande:
**07.01.1998 Bulletin 1998/02**

(73) Titulaire: **COMMISSARIAT A L'ENERGIE ATOMIQUE**
**75015 Paris Cédex 15 (FR)**

(72) Inventeurs:
• **Thevenin, Bernard**
**38120 Saint-Egreve (FR)**

• **Glasser, Francis**
**38320 Eybens (FR)**
• **Martin, Jean-Luc**
**38620 Saint-Geoire-En-Valdaine (FR)**

(74) Mandataire: **Dubois-Chabert, Guy et al**
**BREVATOME**
**3, rue du Docteur Lanceraux**
**75008 Paris (FR)**

(56) Documents cités:
EP-A- 0 441 521     EP-A- 0 487 108
DE-A- 4 426 451     US-A- 5 448 613
US-A- 5 510 623

## Description

Domaine de l'invention

L'invention concerne un procédé et un dispositif de prise d'images numériques permettant de contrôler et d'optimiser le temps d'exposition de l'objet à des rayonnements γ ou X afin de réaliser à chaque prise d'images, une image de bonne qualité tout en minimisant la dose de rayonnements auquel l'objet est soumis.

Cette invention trouve des applications dans le domaine de la radiographie X ou γ et, en particulier, la radiographie médicale et la radiographie dentaire, où il est nécessaire de limiter la dose des rayonnements reçus par le patient et par le praticien.

Etat de la technique

En radiographie médicale ou dentaire, l'objet à radiographier est une partie du corps humain; cette partie diffère selon l'individu : selon l'âge, la morphologie, etc. Le temps d'exposition durant lequel cette partie du corps (que l'on appellera « objet » dans la suite de la description) doit être exposée aux rayonnements pour permettre de réaliser une image de qualité convenable, est donc variable.

Selon une technique classique de radiologie médicale, l'image de la partie du corps à observer est obtenue par impression d'une pellicule photographique. Dans cette technique, le temps d'exposition durant lequel l'objet doit être soumis aux rayonnements est défini en positionnant une minuterie sur le pictogramme de l'objet.

Ce temps d'exposition peut être choisi de façon quelque peu approximative car les pellicules photographiques ont une latitude de temps de pose (ou temps d'exposition) très large. On peut ainsi obtenir très facilement une image de qualité convenable, c'est-à-dire une image qui n'est ni sous-exposée, ni surexposée et qui peut donc être lue par le praticien.

Cependant, l'image sur pellicule nécessite un développement ultérieur à la prise d'images. C'est donc seulement après développement de la pellicule photographique que le praticien sait si l'image est de qualité suffisante pour être utilisée ou s'il doit recommencer une autre prise d'images.

En outre, l'impression d'une pellicule photographique nécessite une dose de rayonnements importante. Or, pour la santé du patient et celle du praticien, il est nécessaire de minimiser cette dose de rayonnements.

Une technique plus récente consiste à réaliser des images numériques affichables sur un écran d'ordinateur. Cette technique permet non seulement de diminuer la dose de rayonnements nécessaire, mais elle permet aussi de modifier l'image (contrastes, couleurs, zoom, etc.) en fonction des besoins du praticien de façon à faire ressortir les zones d'intérêt de l'objet. De plus, cette technique permet d'améliorer la communication avec le patient qui peut regarder l'image affichée et comprendre plus facilement l'origine de sa douleur.

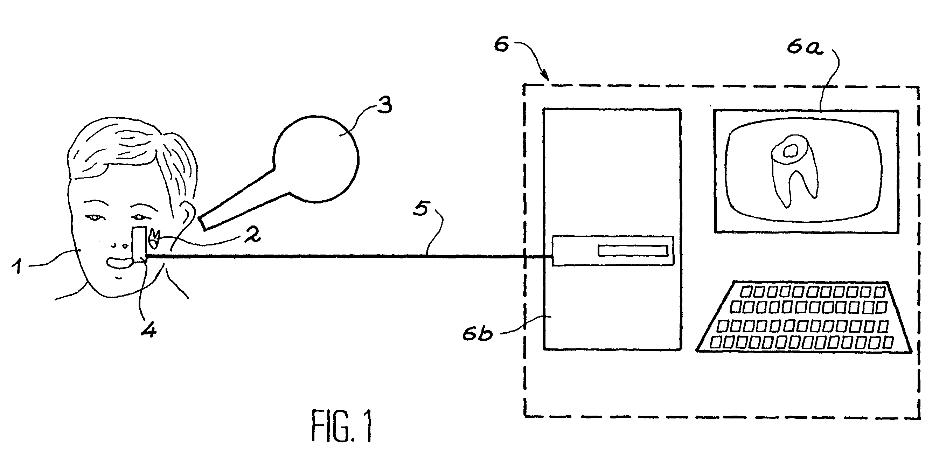

On a représenté sur la figure 1, un exemple de dispositif de radiographie numérique utilisé généralement pour mettre en oeuvre cette technique. Ce dispositif est appliqué, dans le cas particulier de la figure 1, à la radiographie dentaire.

On peut voir, sur cette figure, la tête d'un patient 1 dont on veut faire la radiographie d'une dent (celle-ci portant la référence 2) ainsi que le dispositif permettant de réaliser cette radiographie.

Ce dispositif comporte un générateur de rayonnements X, référencé 3, qui émet des rayonnements X en direction de la dent 2, derrière laquelle est placé un capteur d'images 4.

Généralement, les capteurs d'images utilisés sont des capteurs de type CCD (dispositif à charge couplée) prévus pour des rayonnements dans le domaine du « visible ». Les rayonnements émis par la source étant des rayonnements X ou γ, ces capteurs d'images sont associés à des scintillateurs placés devant les capteurs pour transformer les rayonnements X ou γ en photons lumineux détectables par les capteurs CCD. Ces scintillateurs ne sont pas représentés sur la figure 1 par mesure de simplification de celle-ci.

Le capteur 4 est connecté, par un câble 5, à un système 6 de lecture et de traitement des informations fournies par ce capteur. Ce système de lecture 6 comporte, d'une part, un écran vidéo 6a sur lequel est affichée l'image de la dent 2 et des moyens de traitement 6b du type ordinateur PC qui assurent la formation de l'image de la dent sur l'écran 6a à partir des informations fournies par le capteur d'images 4.

Différents articles du journal IMUDON décrivent des dispositifs de radiographies numériques destinés au domaine dentaire dont, en particulier, l'article « Sens-a-ray » de NELVIG et Al., Décembre 1992, l'article « Direct digital radiography for the detection of periodontal bone lisions » de A. Joy FURKART et Al., Novembre 1992, et l'article « Basic technical properties of a system for direct acquisition of digital intraoral radiographs » de U. WELANDER et Al., Avril 1993.

Cependant, les capteurs d'images CCD ont une sensibilité, c'est-à-dire un rendement de détection des rayonnements, très variable d'un capteur à l'autre. Aussi, le temps d'exposition auquel doit être soumis l'objet dépend très fortement du capteur utilisé.

En outre, ces capteurs passent très rapidement d'un fonctionnement linéaire à un état de saturation, sans état intermédiaire. Le temps d'exposition optimal qui permet d'obtenir une image optimale est donc très proche du temps d'exposition donnant une image saturée (en niveaux de gris, contrastes, etc.). Aussi, une image peut passer d'une très bonne qualité à une surexposition en un laps de temps pendant lequel l'objet reçoit une dose de rayonnements supplémentaire très légère mais suffisante pour saturer le capteur. Or, lorsque l'image réalisée est saturée (images sous-exposées ou surexposées), l'opérateur doit refaire une nouvelle prise d'images et donc soumettre le patient à une nouvelle dose de rayonnements.

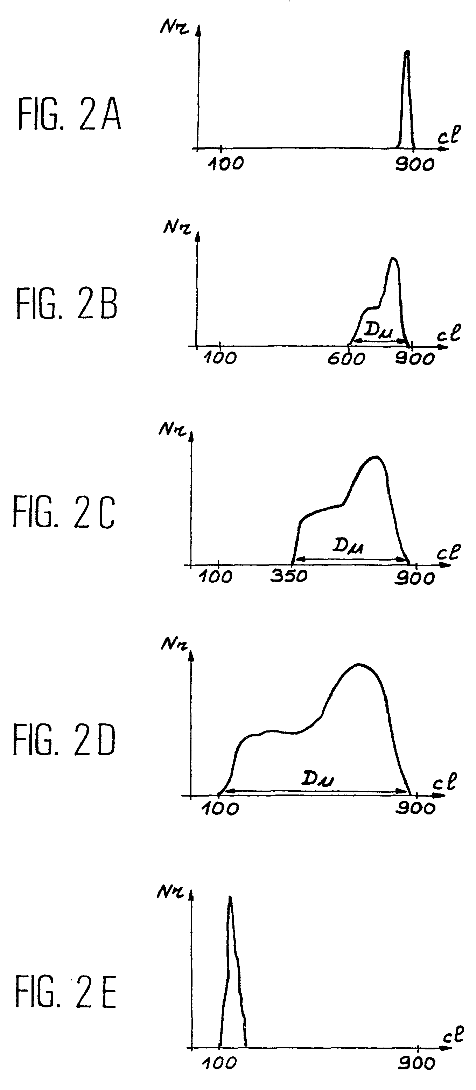

Pour une meilleure compréhension de ce problème, on a représenté sur les figures 2A à 2E, différents histogrammes représentatifs de la définition (niveaux de gris, contrastes, etc.) de différents types d'images.

Autrement dit, ces histogrammes montrent la répartition de la quantité de rayonnements (Nr) traversant l'objet à radiographier en fonction du nombre de classes (cl). On appelle "classes", les valeurs codées correspondant aux différents niveaux de tension des pixels. En particulier, pour une tension de 2V, cl = 100 et pour une tension de 5V, cl = 900.

Ces histogrammes expriment donc le nombre de fois où chaque niveau de tension entre 2V et 5V (exprimés par les 800 classes) est affecté à un pixel. En pratique, les classes inférieures à 100 et supérieures à 900 ne sont pas prises en compte sur ces histogrammes car elles représentent des marges de sécurité pour prendre en compte les dispersions du signal vidéo d'un capteur à l'autre.

On comprendra alors que plus l'histogramme est étalé entre les classes 100 et 900, plus l'image qu'il représente aura une bonne qualité. En d'autres termes, pour être de qualité convenable, c'est-à-dire ni sous-exposée, ni sur exposée, une image doit exploiter une grande partie de la dynamique du capteur. Une image optimale est donc représentée sur toute la dynamique du capteur, soit sur 800 classes, pour les exemples réalisés sur ces figures 1A-1E.

La figure 2A représente l'histogramme des niveaux de définition d'une image sous-exposée ou d'une image opaque aux rayonnements X. On voit sur cette figure, que l'histogramme est regroupé autour de la classe 900 ; l'image obtenue aura donc des niveaux de gris très uniformes et sera illisible pour le praticien.

La figure 2B représente l'histogramme des niveaux de définition d'une image sous-exposée ayant tout de même une certaine dynamique utile $D_u$, d'une valeur d'environ 300 classes. L'image correspondant à cet histogramme est de bonne qualité, mais peut être encore améliorée.

Sur la figure 2C, on a représenté l'histogramme des niveaux de définition d'une image "intéressante", c'est-à-dire d'une image de qualité. Cet histogramme montre que la dynamique utile $D_u$ de l'image correspondante est d'environ 550, ce qui est suffisant pour que l'image obtenue soit de très bonne qualité.

Cependant, la qualité de cette image peut encore être améliorée :

Sur la figure 2D, on a représenté l'histogramme des niveaux de définition d'une image "optimale", c'est-à-dire d'une image dont la qualité est optimale. La dynamique $D_u$ de cette image est, comme on le voit sur cette figure, comprise entre environ 100 et 900 classes,

soit $D_u \simeq 800$. Cette image exploite donc la dynamique utile entière du capteur et le rapport signal sur bruit est optimal.

La figure 2E, représente l'histogramme d'une image surexposée, c'est-à-dire une image ayant une dynamique utile très faible, avoisinant la classe 100.

Les brevets US-A-5 448 613, US-A-5510623, DE-A-4 426 451 préconisent d'utiliser des pixels de mesure pour faire une mesure de dose et lorsque la dose est atteinte de stopper l'émission de rayonnements.

Exposé de l'invention

L'invention a justement pour but de remédier aux inconvénients des techniques exposées précédemment. A cette fin, elle propose un procédé et un dispositif de prise d'images numériques, selon les revendications 1 et 5, dans lesquels le temps d'intégration des charges est contrôlé et optimisé de façon à réaliser, à chaque prise d'images, une image non-saturée et à minimiser la dose de rayonnements nécessaire pour réaliser cette image.

Un des objets de l'invention est donc de permettre la réalisation, à chaque prise d'images, d'une image de qualité correcte, utilisable par le praticien, avec un minimum de dose de rayonnements.

Un autre objet de l'invention est de permettre la réalisation d'une image de qualité optimale exploitant au mieux la dynamique du capteur, sans risque de saturer ce dernier.

De façon plus précise, l'invention concerne un procédé pour la prise d'images numériques d'un objet placé devant au moins un capteur d'images et soumis pendant un certain temps d'exposition à des rayonnements X ou γ. Le capteur d'images utilisé dans ce procédé comporte une couche de matériau de détection apte à transformer les rayonnements X ou γ en charges électriques et une pluralité de pixels aptes à collecter ces charges électriques et à fournir, à partir de mesures, des informations sur la transparence de l'objet aux rayonnements. Ce procédé comporte les étapes consistant à :

    a) choisir, parmi la pluralité de pixels, des pixels de mesure utilisés pour mesurer la dose de rayonnements reçus par l'objet et contrôler le temps d'exposition, les autres pixels du capteur étant des pixels d'image utilisés pour former l'image numérique; et
      à chaque instant :

    b) sommer les mesures fournies par les pixels de mesure, cette somme correspondant à la dose d'un pixel d'image située au milieu de l'histogramme et appelée dose moyenne ;
    c) comparer cette mesure de dose à une valeur de consigne prédéfinie; et
    d) lorsque cette mesure de dose moyenne atteint la valeur de consigne, commander l'arrêt des mesures sur chaque pixel d'image; puis

e) former une image de l'objet par lecture des pixels d'image à la fin du temps d'exposition.

Il est à noter que les pixels de mesure fournissent une information en courant de la transparence aux rayonnements X de l'objet à la verticale des pixels.

Le rayonnement reçu par un pixel de mesure crée des électrons qui sont collectés dans une capacité de mesure associée à chaque pixel ; la qualité de charge est représentative de la dose de rayonnement reçue par le pixel mesuré.

Selon un mode de réalisation, l'arrêt de la collecte des charges électriques de l'étape d) consiste à dévier les charges électriques provenant de la couche de matériau de détection vers un substrat d'absorption de sorte que seules les charges collectées pendant le temps d'exposition soient stockées par les pixels.

Ce procédé peut consister, en outre, à réaliser une première image de l'objet à partir des étapes a) à e) en choisissant une première valeur de consigne faible, puis à réaliser une seconde image de l'objet à partir des étapes a) à e) avec une seconde valeur de consigne optimale, déterminée en fonction de la première valeur de consigne.

Le procédé de l'invention peut comporter aussi une étape f) de restauration de l'image numérique formée à l'étape e) par correction, sur cette image numérique de l'objet, des pixels manquants correspondant aux pixels de mesure.

L'invention concerne également un dispositif de mise en oeuvre de ce procédé, selon la revendication 5, qui comporte :

-    une source de rayonnements X ou γ dirigée vers l'objet ;
-    au moins un capteur d'images, placé derrière l'objet par rapport à la source de rayonnements et comportant une couche de matériau de détection apte à transformer les rayonnements reçus en charges électriques ainsi qu'une pluralité de pixels aptes à collecter les charges électriques et à fournir des informations sur la transparence de l'objet aux rayonnements; et
-    un système de lecture pour lire et traiter les informations fournies par les pixels.

Ce dispositif se caractérise par le fait que :

-    la pluralité de pixels comporte des pixels d'image utilisés pour former l'image numérique de l'objet et des pixels de mesure utilisés pour mesurer la dose de rayonnements reçus par l'objet pendant un temps d'exposition ; et que
-    le système de lecture comporte des moyens de détermination d'une mesure de dose moyenne des rayonnements reçus par les pixels de mesure, des moyens de comparaison de cette mesure de dose à une valeur de consigne, des moyens de détection de la fin du temps d'exposition de l'objet aux rayonnements et des moyens de lecture des informations fournies par les pixels d'image à la fin du temps d'exposition.

Avantageusement, les moyens de détermination d'une mesure de dose moyenne des rayonnements comportent :

-    un circuit sommateur de courant fournissant un courant moyen issu des pixels de mesure ;
-    un circuit de conversion du courant en tension pour réaliser une conversion courant/tension, en fonction du temps, la tension étant représentative de la dose reçue par un pixel moyen ;
-    un circuit calculateur de dose pour déterminer, à partir de cette valeur de mesure moyenne, une mesure de la dose moyenne des rayonnements reçue par les pixels d'images.

En effet, les courants issus de l'ensemble des pixels de mesure sont sommés, puis dirigés vers un circuit intégrateur, ou circuit de conversion, situé, avantageusement, à l'extérieur du capteur.

Ce circuit intégrateur réalise une conversion de ce courant en tension. Cette tension est représentative de la dose reçue par un pixel moyen.

Avantageusement, cette tension est numérisée à chaque instant et comparée à une consigne d'arrêt numérique.

Selon l'invention, chaque pixel d'image est connecté à un condensateur assurant le stockage des charges reçues par le pixel.

Selon l'invention, le matériau de détection est un semi-conducteur; avantageusement, il peut être du CdTe (tellurure de cadmium).

Selon un mode de réalisation de l'invention, le système de lecture comporte, de plus, des moyens de calcul d'un temps d'exposition optimal.

De façon avantageuse, les pixels d'image sont répartis en plusieurs zones séparées les unes des autres par au moins une rangée de pixels de mesure.

Selon un mode de réalisation de l'invention, le dispositif comporte plusieurs capteurs d'images reliés chacun à des moyens de détermination de la mesure de dose, eux-mêmes reliés à un multiplexeur temporel apte à traiter parallèlement l'information fournie par chacun des moyens de détermination de la mesure de dose.

Brève description des figures

-    La figure 1 représente schématiquement le dispositif de l'invention utilisé pour une radiographie dentaire ;

- les figures 2A à 2E représentent les histogrammes des niveaux de gris de différentes sortes d'images : images sous-exposées, image correcte, image optimale, image surexposée ;
- la figure 3A représente schématiquement une portion d'un capteur d'images conforme à l'invention ;
- la figure 3B montre la répartition des pixels d'image et des pixels de mesure dans un capteur de la figure 3A ;
- la figure 4A représente schématiquement un circuit réalisant un pixel d'image et la figure 4B représente un circuit réalisant un pixel de mesure ;
- la figure 5 représente le diagramme fonctionnel du procédé de l'invention ;
- la figure 6 représente le diagramme synoptique de la chaîne de traitements effectués par le dispositif de l'invention ;
- la figure 7 représente le circuit d'intégration et de numérisation des informations fournies par les pixels de mesure ; et
- la figure 8 représente un schéma de principe du procédé de l'invention lorsque le dispositif comporte plusieurs capteurs d'images.

Description détaillée de modes de réalisation de l'invention

Comme expliqué précédemment, l'invention permet de réaliser une image numérique de qualité convenable d'un objet et, plus particulièrement, d'une partie du corps d'un individu, avec une dose de rayonnements X minimale ; il sera question, dans toute la suite de la description de rayonnements X, sachant qu'il pourrait s'agir aussi bien de rayonnements $\gamma$.

Aussi, pour obtenir une image "optimale", l'invention propose d'améliorer la résolution de codage de l'image, c'est-à-dire le nombre de classes exprimant la dynamique d'absorption choisie et d'améliorer le rapport signal-sur-bruit de l'image. En effet, plus le rapport signal-sur-bruit est important, plus la qualité de l'image sera bonne.

Pour cela, l'invention propose un dispositif qui comporte des éléments identiques à ceux montrés sur la figure 1, à savoir :

- une source de rayonnements qui émet des rayonnements en direction de l'objet ; cette source peut être un générateur de rayonnements X (ou de rayonnements $\gamma$ selon les modes de réalisation) ;
- au moins un capteur d'images, placé derrière l'objet par rapport à la source de rayonnements ; ce capteur assure la transformation des rayonnements reçus du générateur de rayonnements X en informations relatives à la transparence de l'objet aux rayonnements ; et
- un système de lecture qui permet de lire et de traiter ces informations.

Le capteur d'images et le système de lecture sont particuliers à l'invention ; ils seront donc décrits de façon plus précise en référence aux dessins annexés.

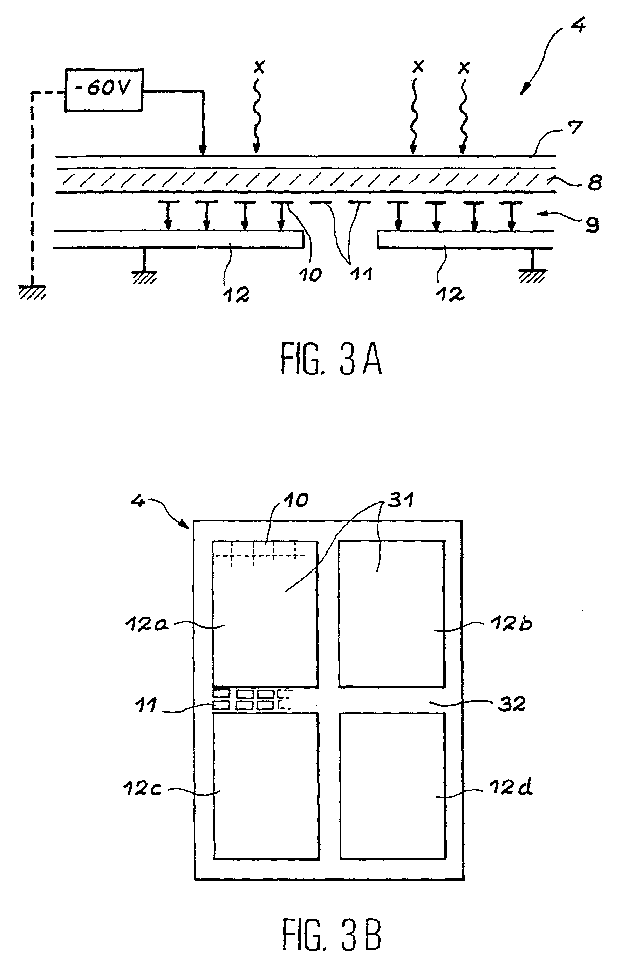

Sur la figure 3A, on a représenté schématiquement un capteur d'images conforme à l'invention. Ce capteur d'images, référencé 4, est du type capteur CdTe. Il comporte une première électrode 7 transparente aux rayonnements X et qui a pour rôle d'établir un champ électrique dans la couche de matériau de détection 8 en CdTe (tellurure de cadmium). Cette couche de CdTe 8, appelée également « couche d'arrêt », a pour but de transformer les photons des rayonnements X en charges électriques proportionnelles, en tout lieu, à la transparence de l'objet aux rayonnements X.

Par ailleurs, cette couche d'arrêt 8 est soumise à un champ électrique qui assure la migration des charges électriques créées vers une électrode de collecte 9. Cette électrode de collecte 9 est morcelée en une multitude d'éléments de petites surfaces (environ 50 x 50 $\mu m^2$) constituant des pixels. Chaque pixel recueille donc les charges électriques créées dans la partie de la couche de CdTe 8 située à sa verticale. Les charges ainsi recueillies sur chaque pixel sont stockées dans un condensateur connecté à chacun des pixels, mais non représenté sur cette figure 3A par mesure de simplification de celle-ci.

Comme on le verra de façon plus précise par la suite, les pixels formant l'électrode de collecte 9 sont de deux types : des pixels d'image, référencés 10, et des pixels de mesure, appelés aussi « pixels dose », référencés 11. Ces deux sortes de pixels sont disposées selon des zones : zones d'image z1 et zones de mesure z2. Sous chaque zone d'image z1 est placé un circuit de lecture 12a, 12b, 12c ou 12d. Ces circuits de lecture 12a,..., 12d permettent de lire les informations fournies par les pixels d'image 10 et, en association avec des moyens de traitements de ces informations, de former l'image numérique représentative de ces informations.

Comme évoqué précédemment, les zones de pixels de mesure et de pixels d'image peuvent avoir des formes différentes. Le mode de réalisation préféré de ces zones de pixels est représenté sur la figure 3B.

Selon ce mode de réalisation, les pixels d'image 10 sont disposés en quatre zones z1 identiques séparées les unes des autres par une zone z2 de mesure. Cette zone de mesure est constituée, selon ce mode de réalisation, de deux rangées de pixels de mesure 11.

Le capteur 4 de l'invention comporte donc quatre circuits de lecture 12a à 12d, c'est-à-dire un circuit de lecture placé sous chaque zone d'image z1.

La figure 3B montre le capteur d'images de la figure 3A selon une vue de dessous. On peut donc voir que les quatre circuits de lecture 12a, 12b, 12c et 12d recouvrent chacun une zone d'image z1 où les pixels d'image 10 sont représentés en pointillés sur la figure. Entre ces circuits de lecture 12a,..., 12d c'est-à-dire entre les zones d'image z1 sont disposées les deux rangées de pixels de mesure 11 qui forment sensiblement une croix entre les quatre circuits de lecture.

A titre indicatif, on peut préciser que pour un capteur de dimensions approximatives de 20 x 30 mm, la zone de mesure z2 comporte deux lignes d'environ 400 pixels chacune. Ces pixels de mesure, qui n'ont aucun circuit de lecture en vis-à-vis, fournissent des informations utilisées pour déterminer la dose des rayonnements X reçus par l'ensemble du capteur.

En effet, ces pixels de mesure sont considérés comme les représentants des pixels d'image ; on considère donc que les mesures effectuées sur ces pixels de mesure correspondent globalement aux mesures que l'on pourrait faire sur les pixels d'image. Des statistiques effectuées sur ces deux sortes de pixels montrent que l'histogramme des pixels de mesure de ce capteur a une très forte ressemblance avec l'histogramme réalisé avec les pixels d'image. Les pixels de mesure sont donc représentatifs de l'ensemble des informations contenues par les pixels de ce capteur.

Pour cela, les charges reçues par les pixels de mesure sont évacuées hors du capteur de sorte qu'elles ne puissent pas être reportées sur les pixels d'image voisins et, par conséquent, qu'elles ne faussent pas l'image obtenue grâce aux pixels d'image.

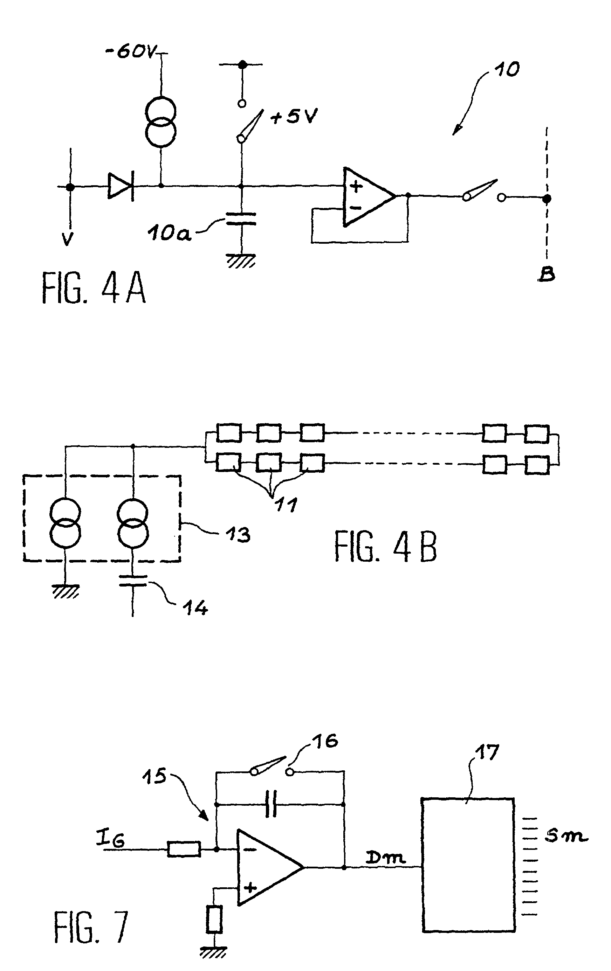

On a représenté sur la figure 4A un pixel d'image tel que connu de l'homme du métier ; cette figure ne sera donc décrite que très succinctement. Comme montré sur la figure 4A, chaque pixel d'image 10 est connecté à un condensateur 10a alimenté en tension par un système de précharge jusqu'à une tension de + 5 V. Ce condensateur 10a est destiné à stocker les charges reçues par le pixel ; ces charges accumulées constituent l'information qui sera lue, via le bus B, par le circuit de lecture situé en regard du pixel pour réaliser l'image numérique.

La figure 4B, représente schématiquement une chaîne de pixels de mesure du capteur 4.

Selon l'invention, ces pixels de mesure 11 sont reliés les uns aux autres et forment un ensemble. Le courant issu de cet ensemble est donc la somme des courants de chaque pixel de mesure.

Il est à noter que les pixels de mesure sont de même nature que les pixels d'image du point de vue matériau de détection, mais que leurs courants ne sont pas dirigés vers un circuit d'intégration privé (contrairement aux pixels d'image), puisqu'ils sont sommés, puis dirigés vers un amplificateur de courant, et enfin conduits vers un dispositif de traitement.

Ainsi le courant issu en sortie de l'ensemble des pixels de mesure, c'est-à-dire le courant résultant de la somme des courants de chaque pixel de mesure, est ensuite multiplié par un multiplicateur de courant 21 (par exemple d'un facteur 10), de façon à permettre un traitement plus aisé des informations obtenues.

Le procédé de l'invention consiste à déterminer, à partir des informations fournies par ces pixels de mesure, une dose de rayonnements moyenne, représentative de la dose des rayonnements reçus par un pixel d'image moyen, c'est-à-dire un pixel ayant un niveau d'intégration de charges moyen. C'est le niveau d'intégration de ce pixel moyen qui sera utilisé, par la suite, pour déterminer si le temps d'exposition de l'objet aux rayonnements X est suffisant ou non. Cela sera expliqué plus en détail ci-après.

Pour cela, le courant obtenu en sortie du multiplicateur 21 est dirigé vers un condensateur de mesure 14 situé hors du capteur. En attribuant à ce condensateur une valeur de 800 x 10 x CM, où CM est la capacité de mesure des pixels, on obtient une évolution de la tension dans un condensateur comparable à ce qui se passe dans le pixel moyen.

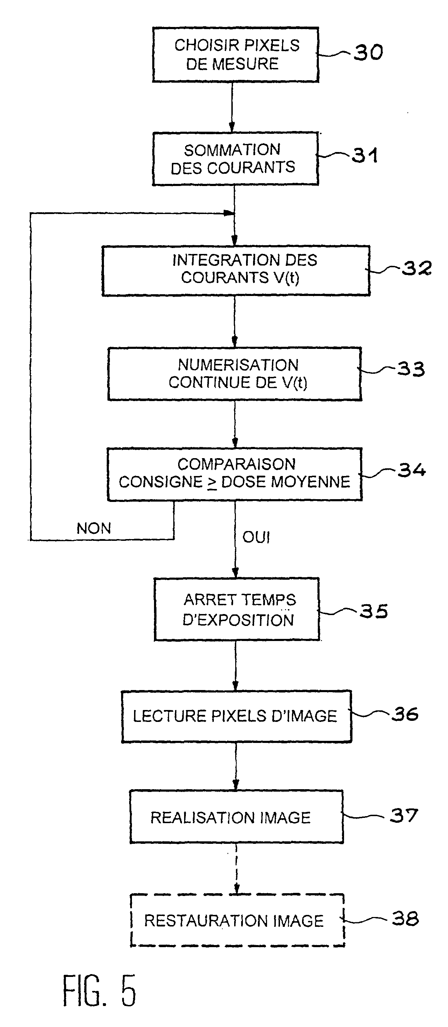

Sur la figure 5, on a représenté un diagramme fonctionnel du procédé de l'invention. Ce procédé consiste tout d'abord à choisir (étape 30) parmi l'ensemble des pixels du capteur, des pixels de mesure destinés à déterminer la dose de rayonnements moyenne d'un pixel moyen.

Ce procédé consiste ensuite, à chaque instant, à effectuer la somme des courants des pixels de mesure (étape 31) pour obtenir un courant moyen. Ce courant moyen est intégré et fournit une information de variation de tension en fonction du temps qui renseigne sur la transparence moyenne de l'objet aux rayonnements X. L'information V(t) évolue de la même manière que la charge d'un pixel d'image « moyen ».

Une étape 33 consiste à numériser de façon continue cette tension V(t) qui représente la dose moyenne des rayonnements reçus par les pixels d'image, c'est-à-dire de la dose de rayonnements reçus par un pixel ayant un niveau de définition moyen.

Une étape 34 consiste ensuite à comparer cette mesure de dose moyenne avec une valeur de consigne fournie par le processeur de commande. Lorsque la dose moyenne atteint ou dépasse la valeur de consigne, cela signifie que le niveau d'intégration de charge moyen des pixels est suffisant pour que l'image obtenue ne soit pas sous-exposée, et pas trop élevé pour que l'image obtenue ne soit pas surexposée.

Le processus est continu et s'interrompt quand la dose moyenne atteint la valeur de consigne: les nouvelles charges reçues par les pixels de mesure sont ajoutées à la somme des charges calculée précédemment.

Si la valeur de consigne est atteinte, la fin du temps d'exposition est décidée (étape 35), ce qui revient à dire que la collecte des charges par les pixels est arrêtée. Cet arrêt de la collecte peut se faire de deux façons différentes, décrites ultérieurement.

Autrement dit, l'intégrateur fournit une tension V(t) et le numériseur discrétise en continu la valeur analogique V(t). Cette valeur numérique est comparée à la consigne. Numériser V(t) permet à un processeur superviseur de contrôler l'évolution de l'intégration sur le capteur (et donc de la dose) et d'agir à la place de l'automate pour arrêter l'intégration sur le capteur et, éventuellement, pour arrêter le générateur X.

Dès la fin de la collecte des charges, on effectue la lecture séquentielle et ordonnée des pixels d'image (étape 36), c'est-à-dire qu'on relève les informations fournies par chaque pixel d'image pour réaliser l'image numérique recherchée (étape 37).

Selon un mode de réalisation de l'invention, le procédé comporte une étape supplémentaire 38 consistant à restaurer l'image obtenue en corrigeant les défauts dus au fait que les valeurs des pixels de mesure ne sont pas prises en compte dans la formation de l'image.

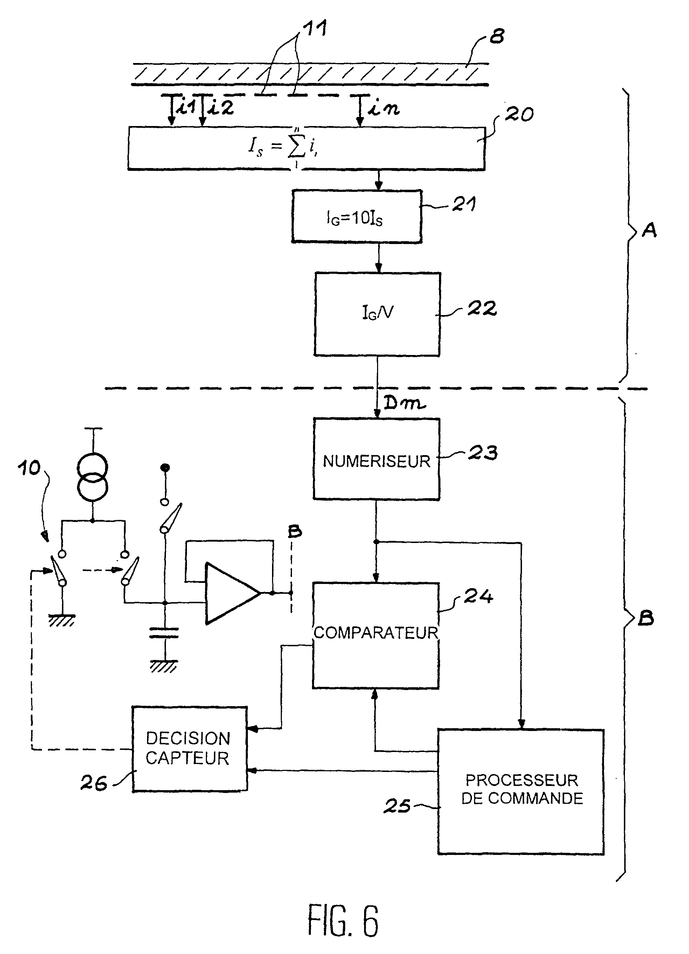

Sur la figure 6, on a représenté un schéma synoptique des différentes opérations du procédé de l'invention. Ces opérations peuvent être divisées en deux parties :

- la partie A qui représente la phase de mesure ; et
- la partie B qui représente la phase de traitement.

La phase de mesure comporte les opérations permettant d'intégrer la dose de rayonnements envoyée par le générateur de rayonnements X et reçue par le capteur, sous une forme de variation de la tension en fonction du temps V(t).

La phase de traitement comporte les opérations permettant de traiter les données mesurées pour décider de la fin du temps d'exposition (numérisation en temps réel et comparaison à la consigne d'arrêt).

De façon plus précise, la phase de mesure A du procédé de l'invention consiste, comme on l'a déjà expliqué précédemment, à faire la somme de tous les courants $i_i$ circulant dans les pixels de mesure 11. Le dispositif permettant de réaliser cette opération de sommation

$$I_S = \sum_{1}^{n}$$

$i_i$ est référencé 20.

La somme $I_S$ de ces courants est ensuite amplifiée, par exemple d'un gain 10, par un amplificateur 21 ; le courant amplifié ainsi obtenu est nommé $I_G$. Ce courant $I_G$ est alors introduit dans un intégrateur 22 qui assure sa conversion en une tension dont l'évolution en Volts par unité de temps est similaire à ce qui se passe dans l'intégrateur de charge d'un pixel d'image moyen.

Cet intégrateur 22 effectue, en outre, un moyennage de façon à déterminer la dose de rayonnements moyenne $D_m$ pour un pixel moyen. On peut considérer, en fait,- que l'intégrateur de dose simule le pixel moyen.

L'information relative à la dose moyenne $D_m$ est ensuite numérisée par un numériseur 23 qui échantillonne cette information (par exemple en $2 \times 10^6$ échantillons/seconde) qui renseigne alors sur ce qui se passe, en temps réel, au niveau du capteur. En effet, tous ces traitements sont effectués à chaque instant de la mesure de façon à informer le processeur de commande de ce qui se passe, à chaque instant, au niveau des pixels de mesure du capteur, l'évolution des pixels d'image ne pouvant être vue en temps réel puisque les données fournies par les pixels d'image seront utilisées seulement en fin de procédé pour former l'image numérique. Les pixels de mesure renseignent donc sur l'état des pixels d'image qui, eux, seront lus après la phase de mesure.

La numérisation de $D_m$ par le numériseur 23 est donc la première étape de traitement du signal mesuré dans la partie de mesure A. Le signal numérisé alors obtenu ($S_n$) est ensuite, d'une part, analysé par un comparateur 24 et, d'autre part, tenu à disposition du processeur de commande 25 qui peut avoir d'autres consignes et être amené à les combiner. En particulier, le signal $S_n$ est comparé avec une valeur de consigne, fournie par le processeur 25 et représentative des niveaux de définition moyens souhaités sur l'image. Elle est déterminée, par le processeur, à partir de données entrées par le praticien et des signaux $S_n$ renseignant sur l'état des pixels à chaque instant ; elle peut être modifiée au cours du procédé.

Il y a bien sûr une marge d'incertitude qui peut être chiffrée quand il y a changement d'objet à chaque mesure, comme c'est le cas en imagerie dentaire, puisqu'il faut s'adapter à chaque patient ; la valeur de consigne est, en effet, choisie de façon à intégrer le souci de ne pas saturer l'image ; elle peut être choisie également, de telle sorte que la plage d'incertitude soit comprise intégralement dans la dynamique utile de l'image. Dans ce cas, l'image risque de ne pas exploiter la dynamique du capteur en entier, mais de l'exploiter seulement entre 60 et 100 %, ce qui permet tout de même d'obtenir une image de qualité tout à fait convenable, comme expliqué en relation avec les figures 2A à 2E.

Le processeur étant apte à connaître, en temps réel, l'état des pixels de mesure (signal $S_n$), il peut décider, de lui-même, l'arrêt de l'intégration des charges et ce, avant même que les moyens de comparaison ne l'aient fait.

En fonction du résultat de la comparaison 24 du signal $S_n$ avec la valeur de consigne, l'exposition de l'objet aux rayonnements X se poursuit ou s'achève. En effet, tant que la valeur mesurée numérisée de la dose moyenne est inférieure à la valeur de consigne, le traitement se poursuit, c'est-à-dire que les pixels du capteur continuent à stocker les charges électriques. Par contre, dès que cette valeur atteint ou dépasse la valeur de consigne, l'intégration des charges par les pixels est arrêtée.

Cette décision d'arrêt de l'intégration des charges est représentée, sur la figure 6, par le bloc 26 et est physiquement effectué de la façon suivante:

- le générateur de rayonnements X continu à émettre des rayonnements et les charges électriques produites par la couche d'arrêt sont écoulées de façon à ne créer aucune perturbation des pixels d'image voisin ; les charges électriques stockées dans chaque pixel à l'instant de la décision d'arrêt d'intégration sont isolées de tout nouvel apport pour sauvegarder la mesure ; avantageusement, ces charges supplémentaires sont déviées vers un substrat qui est apte à les absorber jusqu'à ce que le générateur de rayonnements X soit arrêté (au temps pour lequel il a été programmé) ; de préférence, ce substrat est celui qui comprend le circuit de lecture.

Lorsque la décision d'arrêter l'intégration des charges a été prise, les circuits de lecture prélèvent les informations fournies par les pixels d'image 10, via le bus B afin de réaliser l'image numérique de l'objet, selon un procédé usuel.

Le procédé de l'invention, tel qu'il a été décrit jusqu'à maintenant, permet de réaliser, à chaque prise d'image, une image de bonne qualité. Cependant, le procédé permet également la réalisation d'une image dont la qualité est optimale.

Dans ce cas, le procédé consiste à choisir une première valeur de consigne volontairement faible, c'est-à-dire une valeur de consigne correspondant à une dose de rayonnements X peu élevée, puis à effectuer les étapes 31 à 36 du procédé avec cette première valeur de consigne ; l'image obtenue pour une telle valeur de consigne n'aurait qu'une dynamique utile relativement réduite ; mais cette image n'est pas destinée à être utilisée directement par le praticien ; elle est utilisée comme base pour déterminer, par une simple règle de trois, la dynamique utile optimale et donc le temps d'exposition optimal permettant d'obtenir une image de qualité optimale. On détermine ensuite la dose supplémentaire des rayonnements auxquels il faut soumettre le capteur pour que l'image définitive obtenue sur l'écran soit une image optimale.

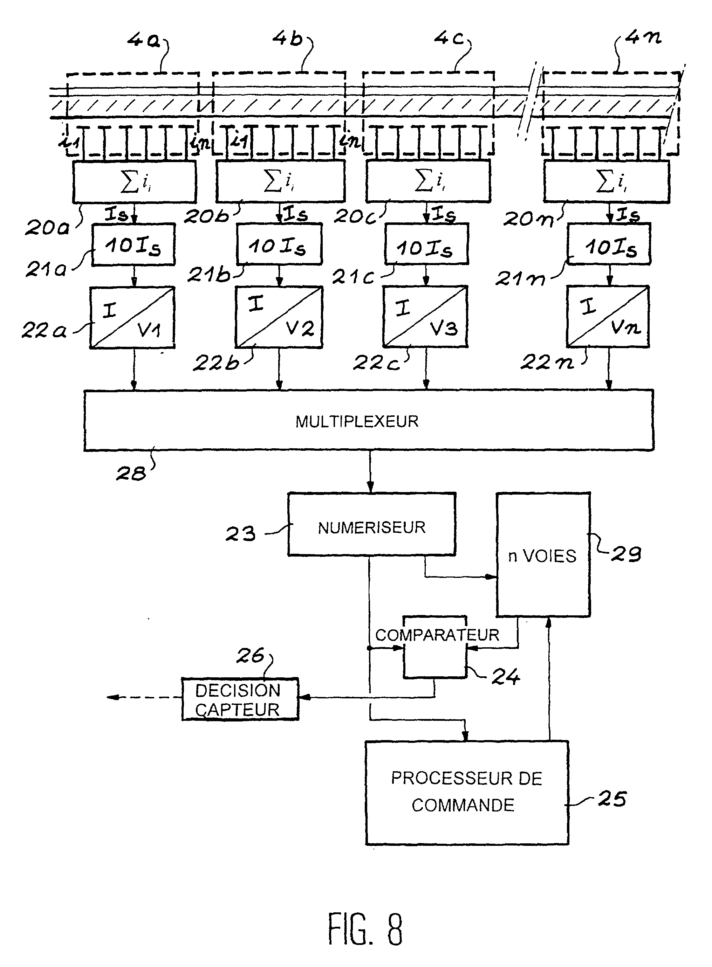

Sur la figure 7, on a représenté schématiquement les circuits de conversion (ou intégrateur) et numériseur 22 et 23 de la figure 6. Plus précisément, ce schéma montre le circuit de conversion 15 qui assure la conversion courant/tension de $I_G$ et la détermination de la dose moyenne de rayonnements sur lequel est monté, en parallèle, un interrupteur 16 permettant de ramener la fonction V(t) à zéro, hors phase de mesure. La sortie de ce circuit de conversion 15 est connectée sur un circuit numériseur 17 qui assure l'échantillonnage du signal $D_m$ de dose moyenne. Ce circuit de numérisation 17 peut être, par exemple, un codeur analogique/numérique codant les signaux sur 10 bits.

Sur la figure 8, on a représenté un schéma synoptique du procédé de l'invention réalisé pour un dispositif comportant plusieurs capteurs.

En effet, selon un mode de réalisation de l'invention, le dispositif peut comporter n capteurs, référencés 4a, 4b, 4c,..., 4n. Les informations obtenues en sortie de chacun des pixels de chaque capteur sont alors sommées par un sommateur 20a, 20b, 20c,..., 20n, puis amplifiées d'un gain 10 par un multiplicateur 21a,..., 21n et ensuite converties en tension par un intégrateur 22a,..., 22n. Les valeurs de tension obtenues en sortie des intégrateurs 22a,..., 22n sont ensuite introduites dans un multiplexeur 28 qui effectue un multiplexage temporel.

La mesure obtenue en sortie de ce multiplexeur 28 est introduite, comme décrit précédemment, dans des moyens de numérisation 23, excepté que dans ce cas, l'échantillonnage est effectué sur les n voies du multiplexeur (représentées par le bloc 29), ce qui donne n valeurs de mesure de dose moyenne numérisées ; chaque valeur numérisée est alors comparée à la valeur de consigne fournie par le processeur.

Le reste du traitement étant identique à celui expliqué en relation avec la figure 6, il ne sera pas décrit ici plus précisément.

Quel que soit le mode de réalisation de l'invention, l'image numérique obtenue en sortie du dispositif peut, par la suite, être corrigée des défauts dus au fait que les informations reçues par les pixels de mesure n'ont pas été utilisées pour réaliser l'image. En particulier, si l'on considère la disposition des pixels de mesure montrée en figure 3B, il manquera, sur l'image obtenue, deux rangées de pixels. Ce défaut peut être corrigé, par le processeur de commande après acquisition de l'image par un procédé connu de l'homme de l'art; en particulier, il peut être corrigé par un procédé très simple qui consiste à recopier, à la place du pixel manquant, le pixel voisin, ou à fabriquer, par un procédé d'interpolation, les pixels manquants.

On précise toutefois que l'image réalisée a été effectuée pour un certain nombre de niveaux (cl = 800 niveaux dans l'exemple donné) alors que l'image qui sera affichée sur l'écran ne contiendra que 250 niveaux. De toute façon, ce nombre de niveaux de l'image obtenue en sortie du dispositif devra être diminué avant d'être affiché sur l'écran.

**Revendications**

1. Procédé pour la prise d'images numériques d'un objet (2) placé devant au moins un capteur d'images (4) et soumis à des rayonnements X ou γ pendant un certain temps d'exposition, dans lequel le capteur d'images comporte une couche de matériau de détection (8) apte à transformer les rayonnements en charges électriques ainsi qu'une pluralité de pixels (10,11) aptes à collecter ces charges électriques et à fournir, à partir de mesures, des informations sur la transparence de l'objet aux rayonnements, comportant les étapes consistant à:

   a) choisir (30), parmi la pluralité de pixels, des pixels de mesure (11) utilisés pour mesurer un courant représentatif de la dose de rayonnements reçus par l'objet et contrôler le temps d'exposition, les autres pixels du capteur étant des pixels d'image (10) utilisés pour former l'image numérique; et à chaque instant:

    b) sommer (31) les mesures de courant fournies par les pixels de mesure, cette somme correspondant à une dose d'un pixel d'image moyenne, appelée dose moyenne ;

    c) comparer (34) cette mesure de dose à une valeur de consigne prédéfinie;

    **caractérisé en ce qu'**il comporte les étapes suivantes :

    d) lorsque cette mesure de dose atteint la valeur de consigne, commander (35) l'arrêt de la collecte des charges électriques de chaque pixel d'image sans stopper l'émission des rayonnements puis

    e) former (37) une image de l'objet par lecture des pixels d'image à la fin du temps d'exposition.

**2.** Procédé selon la revendication 1, **caractérisé en ce que** l'arrêt de la collecte des charges électriques de l'étape d) consiste à dévier les charges électriques provenant de la couche de matériau de détection vers un substrat d'absorption de sorte que seules les charges collectées pendant le temps d'exposition soient stockées par les pixels.

**3.** Procédé selon l'une quelconque des revendications 1 ou 2, **caractérisé en ce qu'**il consiste à réaliser une première image de l'objet à partir des étapes a) à e) en choisissant une première valeur de consigne faible, puis à réaliser une seconde image de l'objet à partir des étapes a) à e) avec une seconde valeur de consigne optimale, déterminée en fonction de la première valeur de consigne.

**4.** Procédé selon l'une quelconque des revendications 1 à 3, **caractérisé en ce qu'**il comporte une étape f) de restauration de l'image numérique formée à l'étape e) en corrigeant, sur cette image numérique de l'objet, les pixels manquants correspondant aux pixels de mesure.

**5.** Dispositif de prise d'images numériques d'un objet (2) mettant en oeuvre le procédé selon l'une quelconque des revendications 1 à 4 et comportant :

- une source de rayonnements (3) X ou γ dirigés vers l'objet ;
- au moins un capteur d'images (4) placé derrière l'objet, par rapport à la source de rayonnements, et comportant une couche de matériau de détection (8) apte à transformer les rayonnements reçus en charges électriques et une pluralité de pixels (10,11) aptes à collecter les charges électriques et à fournir des informations sur la transparence de l'objet aux rayonnements; et

- un système de lecture (6,12) pour lire et traiter les informations fournies par les pixels,
- la pluralité de pixels comportant des pixels d'image (10) utilisés pour former l'image numérique de l'objet et des pixels de mesure (11) utilisés pour mesurer la dose de rayonnements reçus par l'objet pendant un temps d'exposition ;
- le système de lecture comportant des moyens (20-22) de détermination d'une mesure de dose de rayonnements moyenne reçue par les pixels de mesure, des moyens (24) de comparaison de cette mesure de dose à une valeur de consigne,

**caractérisé en ce qu'**il comporte de plus des moyens (26) pour arrêter la collecte des charges électriques de chaque pixel d'image et pour isoler les charges électriques collectées lorsque la mesure de dose a atteint la valeur de consigne, des moyens (25-27) de détection de la fin du temps d'exposition de l'objet aux rayonnements et des moyens de lecture des informations fournies par les pixels d'image à la fin du temps d'exposition.

**6.** Dispositif selon la revendication 5, **caractérisé en ce que** les moyens de détermination d'une mesure de dose moyenne de rayonnements comportent :

- un circuit sommateur (20) de courant fournissant un courant moyen issu des pixels de mesure ;
- un circuit de conversion (22) pour réaliser une conversion courant/tension, en fonction du temps, la tension étant représentative de la dose reçue par un pixel moyen ;
- un circuit calculateur (23) de dose pour déterminer, à partir de cette valeur de mesure moyenne, une mesure de la dose moyenne des rayonnements reçue par les pixels d'images.

**7.** Dispositif selon la revendication 5 ou 6, **caractérisé en ce que** chaque pixel d'image est connecté à un condensateur (10a,14) assurant le stockage des charges reçues par le pixel.

**8.** Dispositif selon l'une quelconque des revendications 5 à 7, **caractérisé en ce que** le matériau de détection est du CdTe (tellure de cadmium).

**9.** Dispositif selon l'une quelconque des revendications 5 à 8, **caractérisé en ce qu'**il comporte des moyens de traitement (25) connectés aux moyens de lecture pour déterminer un temps d'exposition optimal.

10. Dispositif selon l'une quelconque des revendications 5 à 9, **caractérisé en ce que** les pixels d'image sont répartis en plusieurs zones (zl) séparées les unes des autres par au moins une rangée de pixels de mesure.

11. Dispositif selon l'une quelconque des revendications 5 à 10, **caractérisé en ce qu'**il comporte plusieurs capteurs d'images reliés chacun à des moyens de détermination de la mesure de dose, eux-mêmes reliés à des moyens de multiplexage temporel (28) aptes à traiter, parallèlement, l'information fournie par chacun des moyens de détermination de la mesure de dose.

**Patentansprüche**

1. Verfahren zum Aufnehmen von Digitalbildern eines Gegenstands (2), der vor wenigstens einem Bildaufnehmer (4) angeordnet ist und während einer bestimmten Belichtungszeit Röntgen- oder Gammastrahlen ausgesetzt wird, wobei der Bildaufnehmer eine Detektionsmaterial-Schicht (8) umfasst, fähig die Strahlen in elektrische Ladungen umzusetzen, sowie eine Vielzahl von Pixeln (10,11), die diese elektrischen Ladungen sammeln können und aufgrund von Messungen Informationen liefern können bezüglich der Transparenz des Gegenstands für diese Strahlen, folgende Schritte umfassend:

a) Auswählen (30) von Messpixeln (11) aus der Pixel-Vielzahl, die benutzt werden, um einen Strom zu messen, der repräsentativ ist für die durch den Gegenstand empfangene Strahlungsdosis, und um die Belichtungszeit zu kontrollieren bzw. zu steuern, wobei die anderen Pixel des Aufnehmers Bildpixel (10) sind; und zu jedem Zeitpunkt:

b) Summieren (31) der durch die Messpixel gelieferten Strommessungen, wobei diese Summe einer Dosis eines durchschnittlichen Bildpixels entspricht, Durchschnittsdosis genannt;
c) Vergleichen (34) dieses Dosismaßes mit einem vorher definierten Einstellwert;

**dadurch gekennzeichnet, dass** es die folgenden Schritte umfasst:

d) Befehlen (35), wenn dieses Dosismaß den Einstellwert erreicht, das Sammeln der elektrischen Ladungen jedes Pixels zu beenden ohne die Strahlenaussendung zu beenden, und dann
e) Erzeugen (37) eines Bilds des Gegenstands durch Auslesen der Bildpixel am Ende der Belichtungszeit.

2. Verfahren nach Anspruch 1, **dadurch gekennzeichnet, dass** das Beenden des Sammelns der elektrischen Ladungen des Schritts d) darin besteht, die von der Detektionsmaterial-Schicht stammenden elektrischen Ladungen abzuleiten in ein Absorptionssubstrat, damit nur die während der Belichtungszeit gesammelten Ladungen von den Pixel gespeichert werden.

3. Verfahren nach einem der Ansprüche 1 oder 2, **dadurch gekennzeichnet, dass** es darin besteht, aufgrund der Schritte a) bis e) ein erstes Bild des Gegenstands zu realisieren, indem man einen kleinen ersten Einstellwert wählt, und dann ein zweites Bild des Gegenstands aufgrund der Schritte a) bis e) mit einem optimalen zweiten Einstellwert zu realisieren, der in Abhängigkeit von dem ersten Einstellwert festgelegt wird.

4. Verfahren nach einem der Ansprüche 1 bis 3, **dadurch gekennzeichnet, dass** es einen Schritt f) der Restaurierung des in Schritt e) erzeugten Digitalbilds umfasst, indem in diesem Digitalbild des Gegenstands die den Messpixeln entsprechenden fehlenden Pixel korrigiert werden.

5. Vorrichtung zum Aufnehmen von Digitalbildern eines Gegenstands (2), wobei das Verfahren nach einem der Ansprüche 1 bis 4 angewendet wird, umfassend:

- eine auf den Gegenstand gerichtete Röntgen- oder Gammastrahlenquelle (3);
- wenigstens einen Bildaufnehmer (4), angeordnet hinter dem Gegenstand und eine Detektionsmaterial-Schicht (8) umfassend, fähig die empfangenen Strahlen in elektrische Ladungen umzusetzen, sowie eine Vielzahl von Pixeln (10,11), die diese elektrischen Ladungen sammeln und Informationen liefern können bezüglich der Transparenz des Gegenstands für diese Strahlen; und
- ein Lesesystem (6,12), um die durch die Pixel gelieferten Informationen zu lesen und zu verarbeiten;
- die Vielzahl Pixel, gebildet durch Bildpixel (10) zum Erzeugen des Digitalbilds des Gegenstands sowie Messpixel (11) zum Messen der durch den Gegenstand während der Belichtungszeit empfangenen Strahlung;
- das Lesesystem mit Einrichtungen (20-22) zum Bestimmen eines durch die Messpixel empfangenen durchschnittlichen Strahlungsdosismaßes, sowie Einrichtungen (24) zum Vergleichen dieses Dosismaßes mit einem Einstellwert,

**dadurch gekennzeichnet, dass** sie außerdem Einrichtungen (26) umfasst, um das Sammeln der elektrischen Ladungen jedes Bildpixels anzuhalten und um die gesammelten elektrischen Ladungen zu isolieren, wenn das Dosismaß den Einstellwert erreicht hat, sowie Einrichtungen (25-27) zum Detektieren des Endes der Zeit des Belichtens des Gegenstands mit den Strahlen, und Leseeinrichtungen der durch die Bildpixel am Ende der Belichtungszeit gelieferten Informationen.

**6.** Vorrichtung nach Anspruch 5, **dadurch gekennzeichnet, dass** die Einrichtungen zur Ermittlung einer durchschnittlichen Bestrahlungsdosis umfassen:

- eine einen von den Messpixeln stammenden durchschnittlichen Strom liefernde Strom-Summierschaltung (20);
- eine Umsetzschaltung (22), um in Abhängigkeit von der Zeit eine Strom/Spannung-Umsetzung zu realisieren, wobei die Spannung repräsentativ ist für die Dosis, die ein durchschnittliches Pixel empfängt;
- eine Dosisberechnungsschaltung (23), um aufgrund dieses durchschnittlichen Messwerts ein Maß der durch die Bildpixel empfangenen durchschnittlichen Bestrahlungsdosis zu ermitteln.

**7.** Vorrichtung nach Anspruch 5 oder 6, **dadurch gekennzeichnet, dass** jedes Bildpixel mit einem Kondensator (10a,14) verbunden ist, der die durch das Pixel empfangenen Ladungen speichert.

**8.** Vorrichtung nach einem der Ansprüche 5 bis 7, **dadurch gekennzeichnet, dass** das Detektionsmaterial CdTe Cadmiumtellur ist.

**9.** Vorrichtung nach einem der Ansprüche 5 bis 8, **dadurch gekennzeichnet, dass** sie Verarbeitungseinrichtungen (25) umfasst, verbunden mit den Leseeinrichtungen, um eine optimale Belichtungszeit zu ermitteln.

**10.** Vorrichtung nach einem der Ansprüche 5 bis 9, **dadurch gekennzeichnet, dass** die Bildpixel auf mehrere Zonen (z1) verteilt sind, die durch wenigstens eine Reihe Messpixel voneinander getrennt sind.

**11.** Vorrichtung nach einem der Ansprüche 5 bis 10, **dadurch gekennzeichnet, dass** sie mehrere Bildaufnehmer umfasst, von denen jeder mit Einrichtungen zur Ermittlung des Dosismaßes verbunden ist, die ihrerseits mit Zeitmultiplex-Einrichtungen (28) verbunden sind, die fähig sind, parallel Informationen zu verarbeiten, die durch jede der Ermittlungseinrichtungen des Dosismaßes geliefert werden.

## Claims

**1.** A method for taking digital images of an object (2) placed in front of at least one image sensor (4) and subjected to X or $\gamma$ radiation during a certain exposure time, in which the image sensor includes a layer of detection material (8) capable of converting the radiation into electrical charges and a plurality of pixels (10, 11) capable of collecting these electrical charges and of supplying, from measurements, information on the transparency of the object to the radiation, **characterized in that** it comprises the steps consisting of ;

a) choosing (30), from among the plurality of pixels, measurement pixels (11) used to measure a current representative of the dose of radiation received by the object and controlling the exposure time, the other sensor pixels being image pixels (10) used to form the digital image ; and
at each instant :

b) summing (31) the current measurements supplied by the measurement pixels, this sum corresponding to a mean dose of an image pixel called a mean dose ;
c) comparing (34) this dose measurement to a predefined guide-line value ; and
d) when this dose measurement reaches the guide-line value, commanding (35) the stopping of the measurements on each image pixel ;
then
e) forming (37) an image of the object by reading the image pixels at the end of the exposure time.

**2.** A method according to claim 1, **characterized in that** the stopping of the collection of the electrical charges in step d) consists of diverting the electrical charges coming from the layer of detection material towards an absorption substrate so that only the charges collected during the exposure time are stored by the pixels.

**3.** A method according to claims 1 or 2, **characterized in that** it consists of producing a first image of the object from steps a) to e) by choosing a low first guide-line value and then producing a second image of the object from steps a) to e) with a second optimum guide-line value determined as a function of the first guide-line value.

4. A method according to any one of the claims 1 to 3, **characterized in that** it includes a step f) of regenerating the digital image formed in step e), by correcting, on this digital image of the object, the missing pixels corresponding to the measurement pixels.

5. A device for taking digital images of an object (2) implementing the method according to any one of the claims 1 to 4 including:

   - a source (3) of X or $\gamma$ radiation directed towards the object;
   - at least one image sensor (4) placed behind the object, with respect to the radiation source, and including a layer of detection material (8) capable of converting the radiation received into electrical charges and a plurality of pixels (10, 11) capable of collecting the electrical charges and of supplying information on the transparency of the object to the radiation; and
   - a reading system (6, 12) for reading and processing the information supplied by the pixels, **characterized in that**:

      - the plurality of pixels comprises image pixels (10) used to form the digital image of the object and measurement pixels (11) used to measure the dose of radiation received by the object during the exposure time; and **in that**
      - the reading system comprises means (20-22) of determining a measurement of the mean dose of radiation received by the measurement pixels, means (24) of comparing this dose measurement with a guide-line value;

   **characterized in that** it comprises means (26) for stopping the collection of electric charges of each image pixel and for isolating the electric charges collected when the dose measurement has reached the guide-line value and means (25-27) of detecting the end of the exposure time of the object to the radiation and means of reading the information supplied by the image pixels at the end of the exposure time.

6. A device according to claim 5, **characterized in that** the means of determining a measurement of the mean dose of radiation comprise:

   - a current summation circuit (20) supplying a mean current coming from the measurement pixels;
   - a conversion circuit (22) for carrying out a current/voltage conversion, as a function of time, the voltage being representative of the dose received by an average pixel;
   - a dose calculating circuit (23) to determine, from this value or mean measurement, a measurement of the mean dose of radiation received by the image pixels.

7. A device according to claim 5 or 6, **characterized in that** each image pixel is connected to a capacitor flea, 14) for the storage of the charges received by the pixel.

8. A device according to any one of the claims 5 to 7, **characterized in that** the detection material is CdTe (cadmium telluride).

9. A device according to any one of the claims 5 to 8, **characterized in that** it includes processing means (25) connected to the reading means to determine the optimum exposure time.

10. A device according to any one of the claims 5 to 9, **characterized in that** the image pixels are divided up into several areas (z1) separated from one another by at least one row of measurement pixels.

11. A device according to any one of the claims 5 to 10, **characterized in that** it includes several image sensors each connected to the means of determining the dose measurement, themselves connected to means of time division multiplexing (28) capable of processing in parallel, the information supplied by each of the means of determining the dose measurement.

FIG. 1

EP 0 817 472 B1

FIG. 2A

FIG. 2B

FIG. 2C

FIG. 2D

FIG. 2E

14

-60V

X    X    X

4

7

8

9

10    11

12    12

## FIG. 3 A

4

10    31

12a    12b

11    32

12c    12d

## FIG. 3 B

FIG. 4 A

−60V

+5V

10

10a

B

FIG. 4 B

11

13

14

FIG. 7

15

16

17

$I_G$

$Dm$

$Sm$

CHOISIR PIXELS
DE MESURE — 30

SOMMATION
DES COURANTS — 31

INTEGRATION DES
COURANTS V(t) — 32

NUMERISATION
CONTINUE DE V(t) — 33

COMPARAISON
CONSIGNE ≥ DOSE MOYENNE — 34

NON

OUI

ARRET TEMPS
D'EXPOSITION — 35

LECTURE PIXELS D'IMAGE — 36

REALISATION IMAGE — 37

RESTAURATION IMAGE — 38

FIG. 5

$$I_s = \sum_1^n i_i$$

$I_G = 10 I_s$

$I_G / V$

Dm

NUMERISEUR

COMPARATEUR

DECISION CAPTEUR

PROCESSEUR DE COMMANDE

FIG. 6

FIG. 8